# EUROPÄISCHE PATENTSCHRIFT

(11) **EP 1 993 955 B1**
(45) Veröffentlichungstag und Bekanntmachung des Hinweises auf die Patenterteilung: **23.10.2013**
(21) Anmeldenummer: 07723257.7
(22) Anmeldetag: 14.03.2007
(51) Int. Cl.: C02F 1/24, C02F 3/28, C02F 103/28

(54) **VERFAHREN UND VORRICHTUNG ZUR ANAEROBEN AUFBEREITUNG VON ABWASSER**
PROCESS AND DEVICE FOR THE ANAEROBIC TREATMENT OF WASTE WATER
PROCEDE ET DISPOSITIF POUR LE CONDITIONNEMENT ANAEROBIQUE D'UNE EAU RESIDUAIRE

(30) Priorität: 15.03.2006 DE 102006011951; 20.12.2006 DE 102006060428
(43) Veröffentlichungstag der Anmeldung: 26.11.2008
(73) Patentinhaber: Meri Entsorgungstechnik für die Papierindustrie GmbH, 81673 München (DE)
(72) Erfinder: MENKE, Lucas, 81545 München (DE); TROUBOUNIS, George, 80331 München (DE)
(74) Vertreter: Manitz, Finsterwald & Partner GbR
(86) Internationale Anmeldenummer: PCT/EP2007/002252
(87) Internationale Veröffentlichungsnummer: WO 2007/104551

(56) Entgegenhaltungen:
- EP-A- 0 231 762
- EP-A1- 0 494 399
- WO-A-92/20628
- DE-A1- 3 106 422
- DE-A1-102004 047 010
- JP-A- 54 019 550
- BÜLOW C ET AL: "Schließung des Wasserkreislaufs einer Altpapier verarbeitenden Papierfabrik unter besonderer Berücksichtigung der Calcium-Problematik" DAS PAPIER, [Online] 2003, Seiten 31-38, XP002436148 Gefunden im Internet: URL:http://www.ipwonline.de/download/zellc hem/2003/dp010301.pdf> [gefunden am 2007-06-01]

## Beschreibung

Die vorliegende Erfindung betrifft ein Verfahren zur Reinigung von Abwasser, insbesondere zur kontinuierlichen Reinigung von Abwasser in der Papierindustrie, bei dem zu reinigendes Abwasser einem anaeroben Reaktor zugeführt wird, das Abwasser in dem anaeroben Reaktor mit anaeroben Mikroorganismen kontaktiert wird, um in dem Abwasser enthaltene Verunreinigungen abzubauen, und das gereinigte Abwasser aus dem anaeroben Reaktor abgeführt wird. Des weiteren betrifft die vorliegende Erfindung eine zur Durchführung des erfindungsgemäßen Verfahrens geeignete Vorrichtung.

Zur Abwasserreinigung sind eine Vielzahl von mechanischen, chemischen sowie biologischen Verfahren und entsprechende Reaktoren bekannt. Bei der biologischen Abwasserreinigung wird das zu reinigende Abwasser mit aeroben oder anaeroben Mikroorganismen kontaktiert, welche die in dem Abwasser enthaltenen organischen Verunreinigungen im Falle von aeroben Mikroorganismen überwiegend zu Kohlendioxid und Wasser und im Falle von anaeroben Mikroorganismen vorwiegend zu Kohlendioxid und Methan abbauen. Dabei werden die biologischen Elbwasserreinigungsverfahren in jüngster Zeit zunehmend mit anaeroben Mikroorganismen durchgeführt, weil bei der anaeroben Abwasserreinigung zum einen nicht unter hohem Energieaufwand Sauerstoff in den Bioreaktor eingeführt werden muss und zum anderen bei der Reinigung energiereiches Biogas erzeugt wird, welches nachfolgend zur Energiegewinnung eingesetzt werden kann. Je nach der Art und Form der eingesetzten Biomasse werden die Reaktoren für die anaerobe Abwasserreinigung in Kontaktschlammreaktoren, UASB-Reaktoren, EGSB-Reaktoren, Festbettreaktoren und Fließbettreaktoren unterteilt. Während die Mikroorganismen bei Festbettreaktoren an ortsfesten Trägermaterialen und die Mikroorganismen bei Fließbettreaktoren auf frei beweglichen, kleinem Trägermaterial anhaften, werden die Mikroorganismen bei den UASB- und EGSB-Reaktoren in Form so genannter Pellets eingesetzt.

Bei den UASB- und EGSB-Reaktoren wird dem Reaktor über einen Zulauf im unteren Reaktorbereich kontinuierlich zu reinigendes Abwasser zugeführt und durch ein oberhalb des Zulaufs befindliches, Mikroorganismenpellets enthaltendes Schlammbett geführt. Beim Abbau der organischen Verbindungen aus dem Abwasser bilden die Mikroorganismen insbesondere Methan und Kohlendioxid enthaltendes Gas, welches auch als Biogas bezeichnet wird, das sich teilweise in Form kleiner Bläschen an den Mikroorganismenpellets anlagert und teilweise in Form freier Gasbläschen in dem Reaktor nach oben steigt. Aufgrund der angelagerten Gasbläschen sinkt das spezifische Gewicht der Pellets, weshalb die Pellets in dem Reaktor nach oben steigen. Um das gebildete Biogas und die aufsteigenden Pellets von dem Wasser zu trennen, sind in dem mittleren und/oder oberen Teil des Reaktors Abscheider zumeist in Form von Gashauben angeordnet, unter deren First sich Biogas ansammelt, welches ein Gaspolster ausbildet, worunter eine Flotationsschicht aus Mikroorganismenpellets und Abwasser befindlich ist. Von Gas und Mikroorganismenpellets befreites, gereinigtes Wasser steigt in dem Reaktor nach oben und wird am oberen Ende des Reaktors über Überläufe abgezogen, wohingegen die von den Gasbläschen befreiten Mikroorganismenpellets aufgrund des nunmehr erhöhten spezifischen Gewichts in dem Reaktor wieder nach unten absinken. Derartige Verfahren und entsprechende Reaktoren sind beispielsweise in der EP 0 170 332 A1, in der EP 1 071 636 B1 und in der EP 0 539 430 B1 beschrieben.

Es ist auch bekannt, das zu reinigende Abwasser vor der Zuführung in einen anaeroben Reaktor einem Vorversäuerungsreaktor zuzuführen, in dem eine enzymatische Hydrolyse und Acidogenese stattfindet. Während bei der enzymatischen Hydrolyse Polymere, wie beispielsweise Polysaccharide, Polypeptide und Fette, durch aus Mikroorganismen stammende Exoenzyme zu deren Monomeren, wie Zucker, Aminosäuren und Fettsäuren, abgebaut werden, werden diese Monomere bei der Acidogenese durch acidogene Mikroorganismen in organischer Säuren, Alkohole, Aldehyde, Wasserstoff und Kohlendioxid umgewandelt. Mithin findet in dem Vorversäuerungsreaktor schon eine erste Vorreinigung statt. Zudem können in dem Vorversäuerungsreaktor durch Zugabe geeigneter Nährstoffe und Spurenelemente die für die in dem nachfolgenden anaeroben Reaktor eingesetzten anaeroben Mikroorganismen geeigneten Wachstumsbedingungen eingestellt werden. Beispielsweise weist das in der Papierindustrie anfallende Abwasser regelmäßig nur sehr wenig Stickstoff- und Phosphorverbindungen auf, so dass diese dem Abwasser vor dessen Zuführung in den anaeroben Reaktor zugefügt werden müssen, um ein optimales Wachstum der Mikroorganismen in dem anaeroben Reaktor zu gewährleisten. Gleichermaßen können in dem Vorversäuerungsreaktor durch Zugabe entsprechender pH-Einstellmittel die für das Wachstum der Mikroorganismen in dem nachfolgenden anaeroben Reaktor geeigneten pH-Werte des zu reinigenden Abwassers eingestellt werden.

Ein wesentliches Problem bei der Reinigung von Abwasser in einem anaeroben Reaktor stellt die Wasserhärte des Abwassers bzw. die in dem Abwasser enthaltenen Carbonate und Hydrogencarbonate dar. Wie bereits vorstehend dargelegt werden in anaeroben Reaktoren Mikroorganismenpellets eingesetzt oder diese bilden sich während des Betriebs des Reaktors, die aufgrund ihrer Struktur und Größe Kristallisationskeime für Kalkablagerungen darstellen. Derartige Kalkablagerungen auf den Mikroorganismenpellets beeinträchtigen jedoch deren Funktion. Wie vorstehend dargelegt ist es für die Funktion von anaeroben Reaktoren wichtig, dass die Mikroorganismenpellets ein definiertes spezifisches Gewicht aufweisen, um während des Abbaus der organischen Verbindungen aus dem Abwasser durch das gebildete Biogas, welches an den Mikroorganismenpellets anhaftet, in dem Reaktor nach oben steigen zu können, um an dem Gasabscheider das gebildete Biogas abzutrennen. Nach Abtrennung des Biogases darf das spezifische Gewicht insbesondere nicht so groß werden, dass die Mikroorganismenpellets bis auf den Boden des Reaktors absinken, da diese sonst nicht mehr an dem Reinigungsprozess teilnehmen können. Eine etwaige Kalkabscheidung auf den Mikroorganismenpellets führt jedoch zu einer unkalkulierbaren Verschiebung des spezifischen Gewichts, was dazu führen kann, dass die Mikroorganismenpellets ihre Funktion nicht mehr wahrnehmen können. Auch die Stoffwechseltätigkeit der anaeroben Mikroorganismen bewirkt eine Verschiebung des Kalk-Kohlensäure-Gleichgewichts durch die Erzeugung von unter anderem Hydrogencarbonationen (HCO₃⁻), was eine Kalkausfällung auf den Mikroorganismenpellets weiter begünstigt. Um trotz der Kalkausfällung auf den Mikroorganismenpellets deren Funktion sicherzustellen, müssten die Rezirkulationsmengen in dem anaeroben Reaktor vergrößert werden, um die Pellets trotz des größeren spezifischen Gewichts in dem Reaktor in Schwebe zu halten. Der Rezirkulationsmenge sind aber einerseits durch die hydraulische Kapazität der Separatoren und andererseits durch die Notwendigkeit, die Strömung in dem Reaktor laminar zu halten, Grenzen gesetzt. Höhere Rezirkulationsmengen bewirken außerdem durch die Entstehung von Druckgradienten saug- und druckseitig der Pumpe in der Rezirkulationsleitung das Entweichen von Kohlendioxid und dadurch eine weitere Verschiebung des Kalk-Kohlensäure-Gleichgewichts in Richtung einer Kalkausfällung.

Um dieses Problem zu überwinden, wurde beispielsweise in der Veröffentlichung "anaerobe Behandlung von Abwässern der Papierindustrie mit thermophilen Mikroorganismen" von Bobek et al. in IPW 7/2005 vorgeschlagen, dem anaeroben Reaktor Verkrustungsinhibitoren zuzuführen. Diese Verkrustungsinhibitoren führen jedoch dazu, dass der anorganische Anteil der Mikroorganismenpellets weiter ansteigt. Zudem entstehen durch die Zuführung der Verkrustungsinhibitoren beim Betrieb der anaeroben Reaktoren erhebliche Zusatzkosten.

Eine andere bekannte Lösung dieses Problems besteht darin, das Kohlendioxid nach dem, d.h. stromabwärts des, anaeroben Reaktor(s) in einem aeroben Reaktor zu entfernen. Allerdings kann der ausgefällte Kalkschlamm in der aeroben Stufe die Belüftungsaggregate durch Verstopfen in deren Funktion beeinträchtigen, was wiederum mit erhöhten Kosten verbunden ist.

Aus der WO 92/20628 ist ein Verfahren zur Behandlung von Abwasser bekannt, bei dem zu reinigendes Abwasser in einem anaeroben Reaktor einem anaeroben Behandlungsschritt unterzogen wird, bevor die neben Abwasser suspendierte Feststoffe, welche aktive Biomasse enthalten, enthaltene Suspension aus dem anaeroben Reaktor in einen Flotationsbehälter überführt wird, in dem die suspendierten Feststoffe unter Verwendung eines anoxischen Gases von der Flüssigkeit der Suspension abgetrennt und dann die abgetrennten Feststoffe in den anaeroben Reaktor zurückgeführt werden.

Aufgabe der vorliegenden Erfindung ist daher die Bereitstellung eines einfachen und kostengünstigen Verfahrens zur Reinigung von Abwasser, insbesondere zur Reinigung von Abwasser in der Papierindustrie, bei dem/in der die in dem Abwasser enthaltenen Verunreinigungen unter Vermeidung der vorgenannten Probleme effizient in einem anaeroben Reaktor abgebaut werden können.

Erfindungsgemäß wird diese Aufgabe gelöst durch ein Verfahren gemäß Patentanspruch 1 und durch eine Vorrichtung gemäß Patentanspruch 7.

Indem das zu reinigende Abwasser vor der Zuführung in den anaeroben Reaktor einem Druckentspannungsflotationsschritt unterzogen wird, kann die Wasserhärte des Abwassers durch Ausfällen von Kalk verringert werden, weswegen in dem anaeroben Reaktor eine die Funktion der Mikroorganismenpellets störende Kalkausfällung zuverlässig verhindert werden kann. Ein weiterer besonderer Vorteil des erfindungsgemäßen Verfahrens besteht darin, dass der Druckentspannungsflotationsschritt zumindest teilweise in einer Mikroflotationseinrichtung, welche bei den in dem Stand der Technik bekannten, einen anaeroben Reaktor umfassenden Vorrichtungen zur Abwasserreinigung häufig zur Grobreinigung vorgesehen ist, durchgeführt werden kann, so dass zur Durchführung des erfindungsgemäßen Verfahrens nur geringe Modifikationen an bereits bestehenden Anlagen notwendig sind.

Unter zumindest teilweiser Entkalkung wird im Sinne der vorliegenden Erfindung die Verringerung der Wasserhärte verstanden.

Erfindungsgemäß wird bei dem erfindungsgemäßen Verfahren wenigstens ein Teil des Abwassers zwecks wenigstens teilweiser Entkalkung vor der Zuführung in den anaeroben Reaktor einem Druckentspannungsflotationsschritt unterzogen.

Bei dem Druckentspannungsflotationsschritt wird das Abwasser vorzugsweise auf einen neutralen oder alkalischen pH-Wert eingestellt, mit Gas versetzt und mit Druck beaufschlagt wird, bevor das so behandelte Abwasser einem verringertem Druck ausgesetzt wird. Während durch die Einstellung eines neutralen oder alkalischen pH-Wertes eine Ausfällung von Kalk erreicht wird, bewirkt die anschließende Zugabe von Druckgas, Beaufschlagung mit Druck und nachfolgende Aussetzung gegenüber einem im Vergleich zu dem beaufschlagten Druck verminderten Druck bzw. Entspannung die Ausperlung von kleinen Gasblasen in der Abwassermischung, wobei die einzelnen Gasblasen durch die Mischung nach oben strömen und dabei die ausgefällten Kalkflocken mitreißen, die so leicht von dem Abwasser abgetrennt werden können.

Um eine effiziente Kalkausfällung bei dem Druckentspannungsflotationsschritt zu erreichen, wird in Weiterbildung des Erfindungsgedankens vorgeschlagen, das Abwasser auf einen pH-Wert zwischen 7 und 10, bevorzugt zwischen 7 und 9 und besonders bevorzugt zwischen 7,5 und 8,5 einzustellen. Geeignete pH-Einstellmittel zur Einstellung des pH-Wertes in die vorgenannten Bereiche schließen beispielsweise Natronlauge (NaOH), Kalilauge (KOH) und Calciumhydroxid (Ca(OH)₂) ein. Selbstverständlich kann die Einstellung des pH-Wertes auch auf alle anderen dem Fachmann bekannten Arten erfolgen, beispielsweise dadurch, dass eine chemische Verbindung, wie Harnstoff, katalytisch, z.B. enzymatisch, zu einer basischen Verbindung, wie Ammoniak, umgesetzt wird.

Um die Kalkausfällung zu unterstützen und die bei dem Druckentspannungsflotationsschritt gebildeten Kalkflocken besonders leicht aus dem Abwasser abzutrennen zu können, hat es sich als vorteilhaft erwiesen, dem Abwasser vor oder während dem Druckentspannungsflotationsschritt wenigstens ein Fällungsmittel und/oder wenigstens ein Flockungshilfsmittel zuzusetzen. Während das Fällungsmittel die Kalkausfällung erleichtert, bewirkt das Flockungshilfsmittel die Bildung von Kalkflocken mit einer für eine leichte Abtrennung derselben gewünschten Struktur und Größe.

Während sich als Fällungsmittel Polyaluminiumchlorid bewährt hat, ist ein bevorzugtes Beispiel für ein geeignetes Flockungshilfsmittel Polyacrylamid.

In Weiterbildung des Erfindungsgedankens wird vorgeschlagen, in dem erfindungsgemäßen Verfahren ferner einen Vorversäuerungsschritt vorzusehen, bei dem das Abwasser in einem Vorversäuerungsreaktor einer Hydrolyse und/oder einer Acidogenese unterworfen wird. So wird bereits eine Vorreinigung des dem anaeroben Reaktor zugeführten Abwassers erreicht. Bei dieser Ausführungsform der vorliegenden Erfindung kann das Abwasser nach dem Druckentspannungsflotationsschritt in den anaeroben Reaktor und/oder in den Vorversäuerungsreaktor (zurück)geführt werden.

Vorzugsweise wird bei dem erfindungsgemäßen Verfahren die Temperatur des Abwassers, insbesondere die des dem anaeroben Reaktor zugeführten Abwassers, geregelt und/oder überwacht, um die für die in dem anaeroben Reaktor enthaltenen Mikroorganismen optimale Temperatur einzustellen.

Gemäß einer bevorzugten Ausführungsform ist es vorgesehen, das zu reinigende Abwasser kontinuierlich einer Druckentspannungsflotationseinrichtung, in dem der Druckentspannungsflotationsschritt stattfindet, zuzuführen und dort mit wenigstens einem Teil des kontinuierlich aus dem anaeroben Reaktor abgeführten Abwassers zu vermischen und aus der Druckentspannungsflotationseinrichtung kontinuierlich wenigstens teilweise entkalktes Abwasser abzuführen, welches in einen Vorversäuerungsreaktor sowie von dort kontinuierlich in den anaeroben Reaktor geführt wird.

Alternativ dazu ist es auch möglich, das zu reinigende Abwasser kontinuierlich einer Druckentspannungsflotationseinrichtung, in dem der Druckentspannungsflotationsschritt stattfindet, zuzuführen und dort mit wenigstens einem Teil des kontinuierlich aus dem anaeroben Reaktor abgeführten Abwassers zu vermischen und aus der Druckentspannungsflotationseinrichtung kontinuierlich wenigstens teilweise entkalktes Abwasser abzuführen, welches kontinuierlich in den anaeroben Reaktor geführt wird. Ferner ist es auch möglich, das aus der Druckentspannungsflotationseinrichtung kontinuierlich abgezogene, wenigstens teilweise entkalkte Abwasser in zwei Teilströme aufzutrennen und einen Teilstrom in den anaeroben Reaktor und den anderen Teilstrom in den Vorversäuerungsreaktor (zurück)zuführen und/oder wenigstens teilweise aus der Vorrichtung abzuführen und in einem Produktionsprozess wieder einzusetzen.

In Weiterbildung des Erfindungsgedankens wird vorgeschlagen, das aus dem anaeroben Reaktor kontinuierlich abgeführte, gereinigte Abwasser in zwei Teilströme aufzutrennen, von denen einer aus der Vorrichtung abgezogen wird, wobei der andere Teilstrom in die Druckentspannungsflotationseinrichtung geleitet wird.

Bei der letztgenannten Ausführungsform hat es sich als vorteilhaft erwiesen, dass der der Druckentspannungsflotationseinrichtung zugeführte Teilstrom, bezogen auf den aus dem anaeroben Reaktor abgeführten Gesamtstrom, zwischen 5 und 80 % und besonders bevorzugt zwischen 30 und 50 % beträgt.

Erfindungsgemäß erfolgt die Verfahrensführung derart, dass die Wasserhärte in dem Druckentspannungsflotationsschritt wenigstens um 40 % verringert wird.

Ein weiterer Gegenstand der vorliegenden Erfindung ist eine Vorrichtung zur Reinigung von Abwasser, welche insbesondere zur Durchführung des zuvor beschriebenen, erfindungsgemäßen Verfahrens geeignet ist.

Erfindungsgemäß umfasst die Vorrichtung wenigstens einen Reaktor zur anaeroben Reinigung von Abwasser mit wenigstens einer Zufuhrleitung zur Zuführung von zu reinigendem Abwasser in den Reaktor sowie wenigstens einer Abfuhrleitung zur Abführung von gereinigtem Abwasser aus dem Reaktor, wobei die Vorrichtung desweiteren eine, einen Druckentspannungsflotationsreaktor aufweisende Druckentspannungsflotationseinrichtung umfasst, welche mit der wenigstens einen Abfuhrleitung des anaeroben Reaktors über eine Druckentspannungsflotationszufuhrleitung derart verbunden ist, dass wenigstens ein Teilstrom des aus dem anaeroben Reaktor über die Abfuhrleitung abgezogenen gereinigten Abwassers in den Druckentspannungsflotationsreaktor geleitet werden kann, wobei die Druckentspannungsflotationseinrichtung eine von dem Druckentspannungsflotationsreaktor direkt oder indirekt zu dem anaeroben Reaktor führende Rückfuhrleitung, wenigstens eine Zufuhrleitung für ein Druckgas sowie eine Gaslösungseinrichtung aufweist, welche mit dem Druckentspannungsflotationsreaktor über eine Leitung verbunden ist und in welche die Druckgaszufuhrleitung mündet, wobei die Abwasserzufuhrleitung in eine Mischeinheit mündet und von dort über eine Zufuhrleitung in den Druckentspannungsflotationsreaktor mündet, wobei die Mischeinheit eine Zufuhrleitung für pH-Einstellmittel aufweist.

Ferner ist es bevorzugt, dass die Druckentspannungsflotationseinrichtung wenigstens eine Zufuhrleitung für ein Fällungsmittel und/oder ein Flockungshilfsmittel aufweist.

Zudem hat es sich als zweckmäßig erwiesen, dass die Abwasserzufuhrleitung in eine Mischeinheit mündet und von dort über eine Zufuhrleitung in den Druckentspannungsflotationsreaktor mündet, wobei die Mischeinheit eine Zufuhrleitung für Fällungs- und/oder Flockungshilfsmittel aufweist.

Um eine Vorreinigung des Abwassers zu erreichen, weist die Vorrichtung vorzugsweise ferner eine Vorversäuerungseinrichtung auf, welche bevorzugt stromaufwärts des anaeroben Reaktors vorgesehen ist.

In Weiterbildung des Erfindungsgedankens wird vorgeschlagen, die Vorversäuerungseinrichtung in deren Zulaufbereich mit einer Rückfuhrleitung der Druckentspannungsflotationseinrichtung und in deren Ablaufbereich mit der Zufuhrleitung des anaeroben Reaktors zu verbinden.

Alternativ dazu ist es auch möglich, eine Rückfuhrleitung der Druckentspannungsflotationseinrichtung direkt oder über eine in der Leitung zwischen Vorversäuerungseinrichtung und anaerobem Reaktor angeordnete Mischeinrichtung in den Zulaufbereich des anaeroben Reaktors münden zu lassen.

Um eine insbesondere für die in dem anaeroben Reaktor enthaltenen Mikroorganismen optimale Temperatur einzustellen, weist die Vorrichtung vorzugsweise eine Temperatur-Einstelleinrichtung auf, welche vorzugsweise in der Rückführleitung angeordnet ist. Bevorzugt handelt es sich bei der Temperatur-Einstelleinrichtung um einen Wärmeaustauscher oder um eine Kühleinrichtung, beispielsweise einen Kühlturm.

Vorzugsweise weist der anaerobe Reaktor einen Reaktorbehälter, in dessen unterem Bereich die Zufuhrleitung zu dem anaeroben Reaktor vorgesehen ist, wenigstens einen Zulaufverteiler zur Vermischung des dem Reaktor zugeführten Abwassers mit dem in dem Reaktor befindlichen Medium, wenigstens einen am oberen Reaktorbehälter angeordneten Überlauf zum Abführen von gereinigtem Wasser zu der Reaktorabfuhrleitung sowie wenigstens einen Abscheider auf. Zudem kann der anaerobe Reaktor eine Sinkleitung aufweisen, welche bevorzugt konzentrisch um die Reaktorlängsachse herum angeordnet ist.

Nachfolgend wird die vorliegende Erfindung rein beispielhaft anhand vorteilhafter Ausführungsformen und unter Bezugnahme auf die beigefügten Zeichnungen beschrieben.

Dabei zeigen:
- Fig. 1: eine schematische Ansicht einer Vorrichtung zur Reinigung von Abwasser in der Papierindustrie gemäß dem Stand der Technik,
- Fig. 2: eine schematische Ansicht einer Vorrichtung zur Reinigung von Abwasser in der Papierindustrie gemäß eines ersten Ausführungsbeispiels und
- Fig. 3: eine schematische Ansicht einer Vorrichtung zur Reinigung von Abwasser in der Papierindustrie gemäß eines zweiten Ausführungsbeispiels.

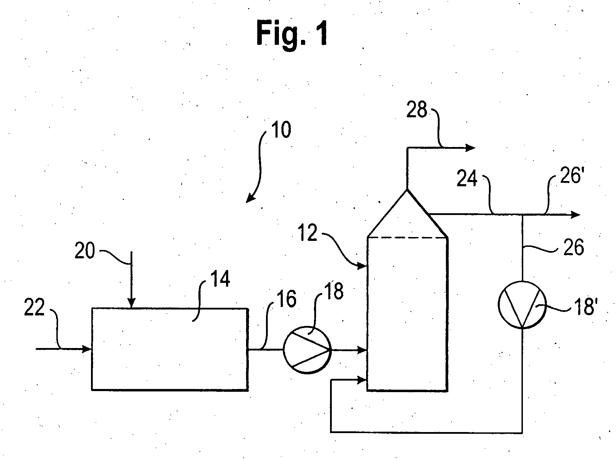

Die in der Fig. 1 gezeigte Vorrichtung 10 zur Reinigung von Abwasser nach dem Stand der Technik umfasst einen anaeroben Reaktor 12 sowie eine Vorversäuerungseinrichtung 14. Die Vorversäuerungseinrichtung 14 ist dem anaeroben Reaktor 12 vorgeschaltet und mit diesem über eine Zufuhrleitung 16 und eine Pumpe 18 verbunden. Ferner weist die Vorversäuerungseinrichtung 14 eine Zulaufleitung 20 für pH-Einstellmittel, Nährstoffe, Spurenelemente und dergl. sowie eine Abwasserzufuhrleitung 22 zur Zuführung des zu reinigenden Abwassers in den Vorversäuerungseinrichtung 14 auf. Zudem umfasst die Vorrichtung 10 eine Anaerobreaktorabfuhrleitung 24, über welche das in dem anaeroben Reaktor 12 gereinigte Abwasser aus dem Reaktor 12 abgezogen wird. Aus der Abfuhrleitung 24 zweigen zwei Teilstromabfuhrleitungen 26, 26' ab, von denen die Teilstromleitung 26 über die Pumpe 18' zu dem Zulaufbereich des anaeroben Reaktors 12 zurückführt, wohingegen über die Teilstromleitung 26' ein Teilstrom des gereinigten Abwassers aus der Vorrichtung 10 abgeführt wird. Schließlich weist der anaerobe Reaktor 12 eine Gasabfuhrleitung 28 zur Abführung des in dem anaeroben Reaktor 12 gebildeten Biogases auf.

Beim Betrieb der Vorrichtung 10 wird das zu reinigende Abwasser, welches beispielsweise aus einer Papierfabrik stammt, zunächst über die Abwasserzufuhrleitung 22 zu der Vorversäuerungseinrichtung 14 geleitet, in der dieses durch die über die Zulaufleitung 20 zugeführten Zusatz- und Hilfsstoffe, wie beispielsweise pH-Einstellmittel, Nährstoffe und/oder Spurenelemente, auf für den nachgeschalteten anaeroben Reaktor 12 geeignete Bedingungen, unter denen die in dem Reaktor 12 enthaltenden Mikroorganismen stoffwechselaktiv sind, eingestellt wird. Als pH-Einstellmittel finden beispielsweise Alkali- oder Erdalkalimetallhydroxidlösungen, wie beispielsweise Natronlauge, Anwendung, wohingegen Harnstoff und Kaliumdihydrogenphosphat Beispiele für geeignete Nährstoffe und Spurenelemente sind. Zudem findet in der Vorversäuerungseinrichtung 14 eine teilweise Zersetzung der Verunreinigungen durch enzymatische Hydrolyse und Acidogenese ein. Nachdem das Abwasser in der Vorversäuerungseinrichtung 14 mit den Zusatz- und Hilfsstoffen vermischt wurde, wird dieses mittels der Pumpe 18 über die Zufuhrleitung 16 in den anaeroben Reaktor 12 gepumpt.

In dem anaeroben Reaktor 12 wird das eingeführte Abwasser zunächst über einen Zulaufverteiler (nicht dargestellt) in dem unteren Bereich des Reaktors 12 mit dem in dem Reaktor 12 befindlichen Medium vermischt und durch ein oberhalb des Zulaufs befindliches, Mikroorganismenpellets enthaltendes Schlammbett (nicht dargestellt) geführt, wobei die in dem Reaktor 12 befindlichen anaeroben Mikroorganismen die in dem Abwasser enthaltenen organischen Verunreinigungen vorwiegend zu Kohlendioxid und Methan abbauen. Das sich beim Abbau der organischen Verbindungen bildende, insbesondere Methan und Kohlendioxid enthaltende Biogas lagert sich teilweise in Form kleiner Bläschen an den Mikroorganismenpellets an und steigt teilweise in Form freier Gasbläschen in dem Reaktor nach oben. Aufgrund der angelagerten Gasbläschen sinkt das spezifische Gewicht der Pellets, weshalb die Pellets in dem Reaktor nach oben steigen. Um das gebildete Biogas und die aufsteigenden Pellets von dem Wasser abzutrennen, sind in dem mittleren und/oder oberen Teil des Reaktors Abscheider (nicht dargestellt) zumeist in Form von Gashauben angeordnet, unter deren First sich das Biogas ansammelt, welches ein Gaspolster ausbildet, worunter eine Flotationsschicht aus Mikroorganismenpellets und Abwasser befindlich ist. Von Gas und Mikroorganismenpellets befreites, gereinigtes Wasser steigt in dem Reaktor nach oben und wird am oberen Ende des Reaktors über die Abfuhrleitung 24 abgezogen, während das gebildete Biogas den anaeroben Reaktor 12 über die Gasabfuhrleitung 28 verlässt.

Von dem während des Betriebs der Vorrichtung 10 aus dem anaeroben Reaktor 12 über die Abfuhrleitung 24 kontinuierlich abgezogenen, gereinigten Abwasser wird über die Teilstromleitung 26' ein Teilstrom aus der Vorrichtung 10 abgezogen, wohingegen der andere Teilstrom über die Teilstromleitung 26 in den Zulaufbereich des anaeroben Reaktors 12 zurückgeführt wird. Aufgrund der Stoffwechseltätigkeit der anaeroben Mikroorganismen erfolgt in dem anaeroben Reaktor 12 eine Verschiebung des Kalk-Kohlensäure-Gleichgewichts, wodurch eine Kalkausfällung auf den als Kristallisationskeimen wirkenden Mikroorganismenpellets, was deren Funktionsfähigkeit negativ beeinflusst.

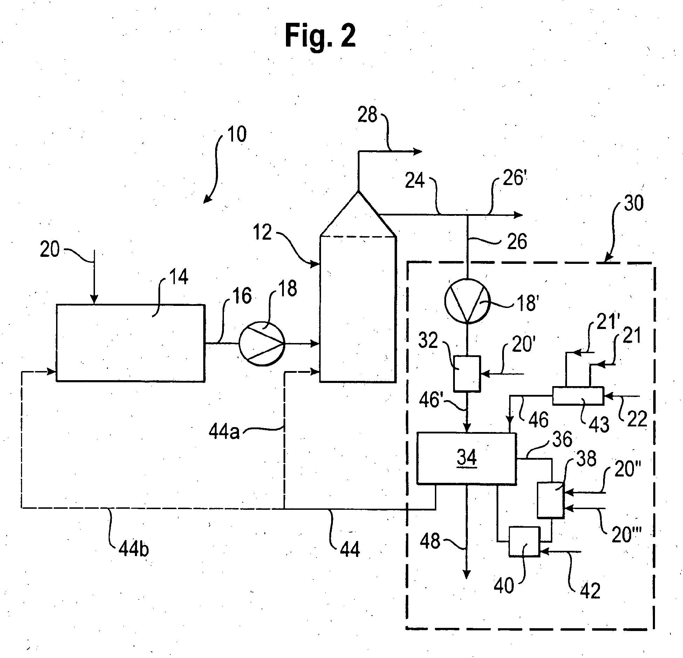

Im Unterschied zu der in der Fig. 1 gezeigten Vorrichtung 10 nach dem Stand der Technik weist die in der Fig. 2 dargestellte Vorrichtung 10 zur Reinigung von Abwasser neben dem anaeroben Reaktor 12 und der Vorversäuerungseinrichtung 14 eine in der Fig. 2 gestrichelt eingerahmt dargestellte Druckentspannungsflotationseinrichtung 30 auf. Zudem wird das zu reinigende Abwasser der Vorrichtung 10 nicht über eine zu der Vorversäuerungseinrichtung 14 führende, sondern über eine in die Druckentspannungsflotationseinrichtung 30 führende Abwasserzufuhrleitung 22 zugeführt.

Die Druckentspannungsflotationseinrichtung 30 umfasst eine pH-Wert-Einstelleinrichtung 32, welcher über eine Zulaufleitung 20' eine zur Einstellung des pH-Wertes des der Druckentspannungsflotationseinrichtung 30 aus dem anaeroben Reaktor 12 über die Teilstromleitung 26 zugeführten Abwassers auf einen gewünschten Wert geeignete Substanz, beispielsweise Natronlauge, zugeführt werden kann. Zudem umfasst die Druckentspannungsflotationseinrichtung 30 einen Druckentspannungsflotationsreaktor 34, in dem mittels Druckentspannungsflotation Kalk aus dem Abwasser abgetrennt wird. Zu diesem Zweck weist der Druckentspannungsflotationsreaktor 34 eine Kreislaufleitung 36 auf, die mit einer Zumischeinheit 38 und mit einem Gaslösungsreaktor 40 verbunden ist. Über die Zulaufleitung 20", 20'" können der Zumischeinheit 38 Fällungsmittel und/oder Flockungshilfsmittel zugegeben werden, während der Gaslösungsreaktor 40 mit einer Druckgaszufuhrleitung 42 ausgestattet ist.

Die Abwasserzufuhrleitung 22 führt in eine Mischeinheit 43, in die ebenfalls Zulaufleitungen 21, 21' einmünden, über welche dem zu reinigenden Abwasser in der Mischeinheit 43 pH-Einstellmittel, Fällungsmittel und/oder Flockungshilfsmittel zugesetzt werden kann. Von der Mischeinheit 43 gelangt das der Vorrichtung 10 zugeführte, zu reinigende Abwasser über die Zulaufleitung 46 in den Druckentspannungsflotationsreaktor 34.

In dem Ablaufbereich des Druckentspannungsflotationsreaktors 34 ist eine Rückfuhrleitung 44, in der optional eine Kühleinrichtung (nicht dargestellt) vorgesehen sein kann, vorgesehen, welche entweder gemäß einer ersten Variante dieses Ausführungsbeispiels als Rückfuhrleitung 44a in den Zulaufbereich des anaeroben Reaktors 12 oder als Rückfuhrleitung 44b in den Zulaufbereich des Vorversäuerungsreaktors 14 führt. Eben so gut ist es auch möglich, sowohl eine Rückfuhrleitung 44a als auch eine Rückfuhrleitung 44b vorzusehen, so dass ein Teil des über die Leitung 44 zurückgeführten gereinigten, entkalkten Abwassers über die Rückfuhrleitung 44a in den Zulaufbereich des anaeroben Reaktors 12 und der übrige Teil des über die Leitung 44 zurückgeführten gereinigten, entkalkten Abwassers über die Rückfuhrleitung 44b in den Zulaufbereich des Vorversäuerungsreaktors 14 geführt wird. Die Rückführleitung 44a kann auch anstatt wie dargestellt direkt in den anaeroben Reaktor 12 in eine hier nicht dargestellte Mischeinrichtung führen, die zwischen Vorversäuerungsreaktor 14 und anaerobem Reaktor 12 in der Leitung 16, insbesondere vor der Pumpe 18, vorgesehen sein kann.

Beim Betrieb der in der Fig. 2 gezeigten Vorrichtung 10 wird das zu reinigende Abwasser kontinuierlich über die Abwasserzufuhrleitung 22 in die Mischeinheit 43 geleitet, in der dieses mit, der Mischeinheit 43 über die Zulaufleitungen 21, 21' zugeführtem pH-Einstellmittel, Fällungsmittel und Flockungshilfsmittel versetzt wird, so dass für eine Kalkausfällung aus dem Abwasser geeignete Bedingungen eingestellt werden, wobei der eingestellte pH-Wert vorzugsweise zwischen 7,5 und 8,5 beträgt. Von der Mischeinheit 43 wird das so vorbehandelte Abwasser über die Zulaufleitung 46 kontinuierlich in den Druckentspannungsflotationsreaktor 34 geleitet. Zudem wird ein Teilstrom des aus dem anaeroben Reaktor 12 über die Leitung 24 kontinuierlich abgezogenen, gereinigten Abwassers über die Teilstromleitung 26 in die pH-Wert-Einstelleinrichtung 32 geführt, in der das zu reinigende Abwasser mit dem der pH-Wert-Einstelleinrichtung 32 über die Zulaufleitung 20' zugeführten pH-Wert-Einstellmittel vermischt und auf für eine Kalkausfällung geeignete Bedingungen eingestellt wird. Vorzugsweise beträgt der Anteil des der pH-Wert-Einstelleinrichtung 32 über die Teilstromleitung 26 zugeführten Teilstroms, bezogen auf den dem anaeroben Reaktor 12 über die Abfuhrleitung 24 entnommenen Gesamtstrom, 5 bis 80 % und besonders bevorzugt 30 bis 50 %. Ferner ist es bevorzugt, dass der pH-Wert dieses Teilstroms durch den Zusatz des pH-Wert-Einstellmittels, vorzugsweise Natronlauge, auf 7,5 bis 8,5 eingestellt wird. Beispielsweise kann die Konzentration an Natronlauge nach der Zugabe des pH-Wert-Einstellmittels, bezogen auf eine 50 gew.-%-ige Lösung, 0,2 bis 0,6 l/m³ betragen. Anschließend wird die so erzeugte Mischung über eine Druckentspannungsflotationszufuhrleitung 46' in den Druckentspannungsflotationsreaktor 34 geleitet.

Aus dem Druckentspannungsflotationsreaktor 34 wird über die Kreislaufleitung 36 kontinuierlich ein Teil der in dem Druckentspannungsflotationsreaktor 34 befindlichen Flüssigkeit entnommen und dieser Teilstrom durch die Zumischeinheit 38 und den Gaslösungsreaktor 40 geleitet, bevor der Teilstrom wieder in den Druckentspannungsflotationsreaktor 34 zurückgeführt wird. In der Zumischeinheit 38 werden dem Teilstrom über die Zulaufleitungen 20", 20"' Fällungsmittel und Flockungshilfsmittel zugesetzt, welche die Ausfällung von Kalk und die Bildung für eine Abtrennung aus dem Abwasser geeignet dimensionierter Kalkflocken unterstützen. Als Fällungsmittel kann beispielsweise Polyaluminiumchlorid eingesetzt werden, wohingegen Polyacrylamid ein Beispiel für ein geeignetes Flockungshilfsmittel ist. In dem stromabwärts der Zumischeinheit 38 vorgesehenen Gaslösungsreaktor 40 wird dem Teilstrom zwecks Vorbereitung auf die nachfolgende Druckgasentspannungsflotation über die Druckgaszufuhrleitung 42 ein Druckgas, beispielsweise Luft oder ein anderes sauerstoffhaltiges Gas oder auch ein sauerstofffreies Gas, zugesetzt und der mit dem Druckgas vermischte Teilstrom mit Druck beaufschlagt, bevor der so behandelte Teilstrom in den Druckentspannungsflotationsreaktor 34 zurückgeführt wird. In dem Druckentspannungsflotationsreaktor 34 expandiert die mit Druck beaufschlagte und mit Gas versetzte Mischung schlagartig, so dass das in dem Wasser gelöst vorliegende Gas ausperlt und in Form von Gasblasen in dem Druckentspannungsflotationsreaktor 34 nach oben aufsteigt. Gleichzeitig bildet der in dem Wasser befindliche Kalk aufgrund der vorliegenden Fällungs- und Flockungshilfsmittel Flocken geeigneter Größe und Struktur, so dass diese durch die nach oben steigenden Gasblasen an die Wasseroberfläche in dem Druckentspannungsflotationsreaktor 34 getrieben werden. Während der sich so bildende Kalkschlamm über die Schlammabfuhrleitung 48 aus dem Druckentspannungsflotationsreaktor 34 entfernt wird, wird das gereinigte und von Kalk befreite Wasser, je nach Verfahrensvariante, über die Rückfuhrleitung 44a direkt oder über die oben erwähnte Mischeinrichtung in den Zulaufbereich des anaeroben Reaktors 12 und/oder über die Rückfuhrleitung 44b in den Zulaufbereich des Vorversäuerungsreaktors 14 geführt.

Aufgrund der Ausfällung und Abtrennung des Kalks aus dem der Vorrichtung 10 über die Abwasserzufuhrleitung 22 zugeführten Abwasser und der Ausfällung und Abtrennung des Kalks aus dem der Druckentspannungsflotationseinrichtung 30 zugeführten, aus dem anaeroben Reaktor 12 stammenden Teilstroms in der Druckentspannungsflotationseinrichtung 30 wird die Wasserhärte des in den anaeroben Reaktor 12 über die Zulaufleitung 16 und ggf. die Rückfuhrleitung 44a zugeführten Abwassers auf einen geeignet niedrigen Wert verringert, dass in dem anaeroben Reaktor 12 keine die Funktion der Mikroorganismenpellets störenden Mengen an Kalk abgeschieden werden, so dass die Reinigungseffizienz des anaeroben Reaktors 12 optimiert wird.

Indem das zu reinigenden, der Vorrichtung 10 über die Abwasserzufuhrleitung 22 zugeführte Abwasser zunächst in die Druckentspannungsflotationseinrichtung 30 geleitet wird, bevor dieses in den stromabwärts der Druckentspannungsflotationseinrichtung 30 gelegenen anaeroben Reaktor 12 geführt wird, kann eine regelmäßig dem anaeroben Reaktor 12 in den aus dem Stand der Technik bekannten Vorrichtungen vorgeschaltete, als Einrichtung zur Separation von partikulärem Material fungierende Mikroflotationseinrichtung mit dem Druckentspannungsflotationsreaktor 34 kombiniert werden. Dadurch können die Kosten für die Vorrichtung 10 erheblich verringert werden.

In der in der Fig. 2 gezeigten Vorrichtung sind zwei Zulaufleitungen 20', 21 für pH-Einstellmittel vorgesehen, von denen die Zulaufleitung 20' über die pH-Wert-Einstelleinrichtung 32 in den über die Teilstromleitung 26 zugeführten Teilstrom aus dem anaeroben Reaktor und die Zulaufleitung 21 über die Mischeinheit 43 in das über die Abwasserzufuhrleitung 22 zugeführte zu reinigende Abwasser mündet. Anstatt dessen kann auch nur eine der Zulaufleitungen 20', 21 vorgesehen sein oder anstelle beider Leitungen eine direkt in den Druckentspannungsflotationsreaktor 34 führende Zulaufleitung für pH-Einstellmittel (nicht dargestellt) vorgesehen sein. Gleichermaßen kann auf die zu der Mischeinheit 43 führende Zulaufleitung 21' für Fällungs- und/oder Flockungshilfsmittel verzichtet werden, so dass die Konzentration an Fällungs- und/oder Flockungshilfsmittel allein über die Zulaufleitungen 20", 20"' erfolgt.

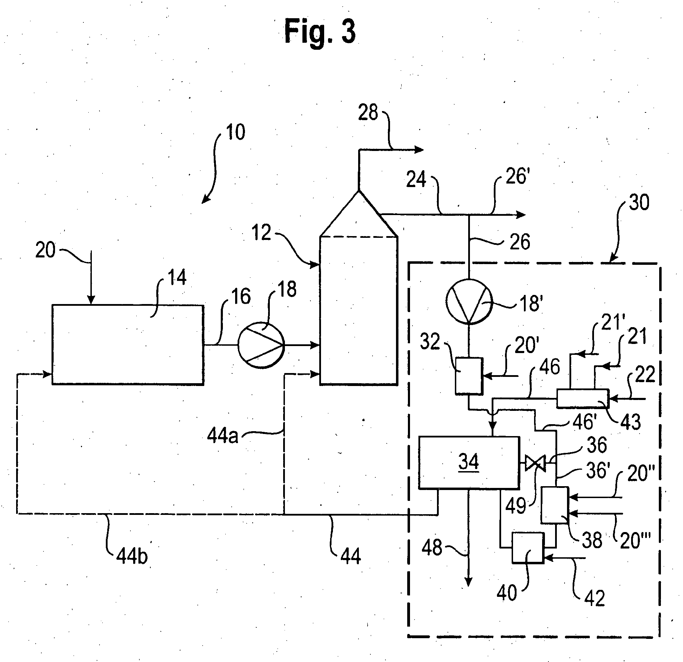

Die in der Fig. 3 dargestellte Vorrichtung 10 gemäß eines zweiten Ausführungsbeispiels unterscheidet sich von der in der Fig. 2 gezeigten dadurch, dass der der Druckentspannungsflotationseinrichtung 30 über die Teilstromleitung 26 aus dem anaeroben Reaktor 12 zugeführte Teilstrom nach der pH-Wert-Einstelleinrichtung 32 nicht direkt in den Druckentspannungsflotationsreaktor 34, sondern zunächst in die zu der Zumischeinheit 38 führende Leitung 36' geführt wird. Zudem ist eine von dem Druckentspannungsflotationsreaktor 34 zu der Leitung 36' führende Kreislaufleitung 36 vorgesehen, welche mit einem Ventil 49 versehen ist, über den die Kreislaufleitung geöffnet oder geschlossen werden kann. Alternativ zu der in Fig. 3 gezeigten Ausführungsform kann der der Druckentspannungsflotationseinrichtung 30 über die Teilstromleitung 26 aus dem anaeroben Reaktor 12 zugeführte Teilstrom nach der pH-Wert-Einstelleinrichtung 32 auch über einen Saugstutzen einer Druckpumpe zu dem Gaslösungsreaktor 40 zugeführt werden.

## Patentansprüche

1. Verfahren zur Reinigung von Abwasser, insbesondere zur kontinuierlichen Reinigung von Abwasser in der Papierindustrie, bei dem zu reinigendes Abwasser einem anaeroben Reaktor (12) zugeführt wird, das Abwasser in dem anaeroben Reaktor (12) mit anaeroben Mikroorganismen kontaktiert wird, um in dem Abwasser enthaltene Verunreinigungen abzubauen, und das gereinigte Abwasser aus dem anaeroben Reaktor (12) abgeführt wird, wobei wenigstens ein Teil des Abwassers zwecks wenigstens teilweiser Entkalkung vor der Zuführung in den anaeroben Reaktor (12) einem Druckentspannungsflotationsschritt unterzogen wird, wobei die Wasserhärte in dem Druckentspannungsflotationsschritt wenigstens um 40 % verringert wird, wobei das Verfahren in einer Vorrichtung umfassend wenigstens einen Reaktor (12) zur anaeroben Reinigung von Abwasser mit wenigstens einer Zufuhrleitung (16) zur Zuführung von zu reinigendem Abwasser in den Reaktor (12) sowie wenigstens einer Abfuhrleitung (24) zur Abführung von gereinigtem Abwasser aus dem Reaktor (12) durchgeführt wird, wobei die Vorrichtung (10) desweiteren eine, einen Druckentspannungsflotationsreaktor (34) aufweisende Druckentspannungsflotationseinrichtung (30) umfasst, welche mit der wenigstens einen Abfuhrleitung (24) des anaeroben Reaktors (12) über eine Druckentspannungsflotationszufuhrleitung (46') derart verbunden ist, dass wenigstens ein Teilstrom des aus dem anaeroben Reaktor (12) über die Abfuhrleitung (24) abgezogenen gereinigten Abwassers in den Druckentspannungsflotationsreaktor (34) geleitet werden kann, wobei die Druckentspannungsflotationseinrichtung (30) eine von dem Druckentspannungsflotationsreaktor (34) direkt oder indirekt zu dem anaeroben Reaktor (12) führende Rückfuhrleitung (44, 44a, 44b), wenigstens eine Zufuhrleitung (42) für ein Druckgas sowie eine Gaslösungseinrichtung (40) aufweist, welche mit dem Druckentspannungsflotationsreaktor (34) über eine Leitung (36, 36') verbunden ist und in welche die Druckgaszufuhrleitung (42) mündet, wobei die Abwasserzufuhrleitung (22) in eine Mischeinheit (43) mündet und von dort über eine Zufuhrleitung (46) in den Druckentspannungsflotationsreaktor (34) mündet, wobei die Mischeinheit (43) eine Zufuhrleitung (21) für pH-Einstellmittel aufweist, über welche dem Abwasser bei dem Verfahren pH-Einstellmittel zugesetzt wird.

2. Verfahren nach Anspruch 1,
**dadurch gekennzeichnet, dass**
das Abwasser in dem Druckentspannungsflotationsschritt auf einen neutralen oder alkalischen pH-Wert zwischen 7 und 10, bevorzugt zwischen 7 und 9 und besonders bevorzugt zwischen 7,5 und 8,5 eingestellt, mit Gas versetzt und mit Druck beaufschlagt wird, bevor das so behandelte Abwasser einem verringertem Druck ausgesetzt wird.

3. Verfahren nach Anspruch 1 oder 2,
**dadurch gekennzeichnet, dass**
dem Abwasser vor oder während dem Druckentspannungsflotationsschritt wenigstens ein Fällungsmittel und/oder wenigstens ein Flockungshilfsmittel zugesetzt wird, wobei das wenigstens eine Fällungsmittel vorzugsweise Polyaluminiumchlorid ist und/ oder das wenigstens eine Flockungshilfsmittel vorzugsweise Polyacrylamid ist.

4. Verfahren nach einem der vorhergehenden Ansprüche,
**dadurch gekennzeichnet, dass**
das zu reinigende Abwasser kontinuierlich einer Druckentspannungsflotationseinrichtung (30), in dem der Druckentspannungsflotationsschritt stattfindet, zugeführt und dort mit wenigstens einem Teil des kontinuierlich aus dem anaeroben Reaktor (12) abgeführten Abwassers vermischt wird und aus der Druckentspannungsflotationseinrichtung (30) kontinuierlich wenigstens teilweise entkalktes Abwasser abgeführt wird, welches in einen Vorversäuerungsreaktor (14) sowie von dort kontinuierlich in den anaeroben Reaktor (12) geführt wird.

5. Verfahren nach einem der vorhergehenden Ansprüche,
**dadurch gekennzeichnet, dass**
das zu reinigende Abwasser kontinuierlich einer Druckentspannungsflotationseinrichtung (30), in dem der Druckentspannungsflotationsschritt stattfindet, zugeführt und dort mit wenigstens einem Teil des kontinuierlich aus dem anaeroben Reaktor abgeführten Abwassers vermischt wird und aus der Druckentspannungsflotationseinrichtung (30) kontinuierlich wenigstens teilweise entkalktes Abwasser abgeführt wird, welches kontinuierlich in den anaeroben Reaktor (12) geführt wird und/oder wenigstens teilweise aus der Vorrichtung (10) abgeführt und in einem Produktionsprozess wieder eingesetzt wird.

6. Verfahren nach Anspruch 4 oder 5,
**dadurch gekennzeichnet, dass**
das aus dem anaeroben Reaktor (12) kontinuierlich abgeführte, gereinigte Abwasser in zwei Teilströme aufgetrennt wird, von denen einer aus der Vorrichtung abgezogen wird, wobei der andere Teilstrom in die Druckentspannungsflotationseinrichtung (30) geleitet wird, wobei der der Druckentspannungsflotationseinrichtung (30) zugeführte Teilstrom, bezogen auf den aus dem anaeroben Reaktor (12) abgeführten Gesamtstrom, zwischen 5 und 80 % und besonders bevorzugt zwischen 30 und 50 % beträgt.

7. Vorrichtung zur Reinigung von Abwasser, insbesondere zur kontinuierlichen Reinigung von Abwasser in der Papierindustrie nach einem der Ansprüche 1 bis 6, umfassend wenigstens einen Reaktor (12) zur anaeroben Reinigung von Abwasser mit wenigstens einer Zufuhrleitung (16) zur Zuführung von zu reinigendem Abwasser in den Reaktor (12) sowie wenigstens einer Abfuhrleitung (24) zur Abführung von gereinigtem Abwasser aus dem Reaktor (12), wobei die Vorrichtung (10) desweiteren eine, einen Druckentspannungsflotationsreaktor (34) aufweisende Druckentspannungsflotationseinrichtung (30) umfasst, welche mit der wenigstens einen Abfuhrleitung (24) des anaeroben Reaktors (12) über eine Druckentspannungsflotationszufuhrleitung (46') derart verbunden ist, dass wenigstens ein Teilstrom des aus dem anaeroben Reaktor (12) über die Abfuhrleitung (24) abgezogenen gereinigten Abwassers in den Druckentspannungsflotationsreaktor (34) geleitet werden kann, wobei die Druckentspannungsflotationseinrichtung (30) eine von dem Druckentspannungsflotationsreaktor (34) direkt oder indirekt zu dem anaeroben Reaktor (12) führende Rückfuhrleitung (44, 44a, 44b), wenigstens eine Zufuhrleitung (42) für ein Druckgas sowie eine Gaslösungseinrichtung (40) aufweist, welche mit dem Druckentspannungsflotationsreaktor (34) über eine Leitung (36, 36') verbunden ist und in welche die Druckgaszufuhrleitung (42) mündet, wobei die Abwasserzufuhrleitung (22) in eine Mischeinheit (43) mündet und von dort über eine Zufuhrleitung (46) in den Druckentspannungsflotationsreaktor (34) mündet, wobei die Mischeinheit (43) eine Zufuhrleitung (21) für pH-Einstellmittel aufweist.

8. Vorrichtung nach Anspruch 7,
**dadurch gekennzeichnet, dass**
die Druckentspannungsflotationseinrichtung (30) wenigstens eine Zufuhrleitung (20", 20"', 21') für ein Fällungsmittel und/oder ein Flockungshilfsmittel aufweist.

9. Vorrichtung nach Anspruch 7 oder 8,
**dadurch gekennzeichnet, dass**
die Mischeinheit (43) eine Zufuhrleitung (21') für Fällungs- und/oder Flockungshilfsmittel aufweist.

10. Vorrichtung nach einem der Ansprüche 7 bis 9,
**dadurch gekennzeichnet, dass**
diese desweiteren eine Vorversäuerungseinrichtung (14) aufweist, welche stromaufwärts des anaeroben Reaktors (12) vorgesehen ist.

11. Vorrichtung nach Anspruch 10,
**dadurch gekennzeichnet, dass**
die Vorversäuerungseinrichtung (14) in deren Zulaufbereich mit einer Rückfuhrleitung (44b) der Druckentspannungsflotationseinrichtung (30) und in deren Ablaufbereich mit der Zufuhrleitung (16) des anaeroben Reaktors (12) verbunden ist.

12. Vorrichtung nach Anspruch 10 oder 11,
**dadurch gekennzeichnet, dass**
eine Rückfuhrleitung (44a) der Druckentspannungsflotationseinrichtung (30) direkt oder über eine in der Leitung (16) zwischen der Vorversäuerungseinrichtung (14) und dem anaeroben Reaktor (12) angeordnete Mischeinrichtung in den Zulaufbereich des anaeroben Reaktors (12) mündet.

## Claims

1. A method for the purification of waste water, in particular for the continuous purification of waste water in the paper making industry, wherein waste water to be purified is supplied to an anaerobic reactor (12), the waste water is contacted with anaerobic microorganisms in the anaerobic reactor (12) to break down contaminants contained in the waste water and the purified waste water is drained out of the anaerobic reactor (12), wherein at least some of the waste water is subjected to a dissolved air flotation step for the purpose of the at least partial deliming before the delivery into the anaerobic reactor (12), with the water hardness being reduced by at least 40% in the dissolved air flotation step, wherein the process is carried out in an apparatus comprising at least one reactor (12) for the anaerobic purification of waste water having at least one supply line (16) for the delivery of waste water to be purified into the reactor (12) as well as having at least one drain line (24) for the draining of purified waste water from the reactor (12), wherein the apparatus (10) furthermore includes a dissolved air flotation device (30) which has a dissolved air flotation reactor (34) and which is connected to the at least one drain line (24) of the anaerobic reactor (12) via a dissolved air flotation supply line (46') such that at least a part flow of the purified waste water drained from the anaerobic reactor (12) via the drain line (24) can be guided into the dissolved air flotation reactor (34), with the dissolved air flotation device (30) having a return line (44, 44a, 44b) leading from the dissolved air flotation reactor (34) directly or indirectly to the anaerobic reactor (12), at least one supply line (42) for a pressurized gas as well as a gas solution device (40) which is connected to the dissolved air flotation reactor (34) via a line (36, 36') and into which the pressurized gas line (42) opens, wherein the waste water supply line (22) opens into a mixer unit (43) and opens from there via a supply line (46) into the dissolved air flotation reactor (34), with the mixer unit (43) having a supply line (21) for pH setting media, via which pH setting media are admixed to the waste water in the process.

2. A method in accordance with claim 1,
**characterized in that**
the waste water is set in the dissolved air flotation step to a neutral or alkaline pH between 7 and 10, preferably between 7 and 9 and particularly preferably between 7.5 and 8.5, is dosed with gas and is pressurized before the waste water treated in this way is exposed to a reduced pressure.

3. A method in accordance with claim 1 or claim 2,
**characterized in that**
at least one precipitant and/or at least one flocculation aid is admixed to the waste water before or during the dissolved air flotation step, wherein the at least one precipitant is preferably polyaluminum chloride; and/or wherein the at least one flocculation aid is preferably polyacrylamide.

4. A method in accordance with any one of the preceding claims,
**characterized in that**
the waste water to be purified is continuously supplied to a dissolved air flotation device (30) in which the dissolved air flotation step takes place and is there mixed with at least some of the waste water continuously drained from the anaerobic reactor (12) and at least partially delimed waste water is drained continuously from the dissolved air flotation device (30) and is guided into a preacidification reactor (14) and also from there continuously into the anaerobic reactor (12).

5. A method in accordance with any one of the preceding claims,
**characterized in that**
the waste water to be purified is continuously supplied to a dissolved air flotation device (30) in which the dissolved air flotation step takes place and is there mixed with at least some of the waste water continuously drained from the anaerobic reactor and at least partially delimed waste water is continuously drained from the dissolved air flotation device (30) and is guided continuously into the anaerobic reactor (12) and/or is at least partly drained from the apparatus (10) and is reused in a production process.

6. A method in accordance with claim 4 or claim 5,
**characterized in that**
the purified waste water continuously drained from the anaerobic reactor (12) is separated into two part flows of which one is drained from the apparatus, with the other part flow being guided into the dissolved air flotation device (30), wherein the part flow supplied to the dissolved air flotation device (30) amounts, with respect to the total flow drained from the anaerobic reactor (12), to between 5 and 80% and particularly preferably to between 30 and 50%.

7. An apparatus for the purification of waste water, in particular for the continuous purification of waste water in the paper making industry in accordance with any one of the claims 1 to 6, comprising at least one reactor (12) for the anaerobic purification of waste water having at least one supply line (16) for the delivery of waste water to be purified into the reactor (12) as well as having at least one drain line (24) for the draining of purified water from the reactor (12), wherein the apparatus (10) furthermore includes a dissolved air flotation device (30) which has a dissolved air flotation reactor (34) and which is connected to the at least one drain line (24) of the anaerobic reactor (12) via a dissolved air flotation supply line (46') such that at least a part flow of the purified waste water drained from the anaerobic reactor (12) via the drain line (24) can be guided into the dissolved air flotation reactor (34), with the dissolved air flotation device (30) having a return line (44, 44a, 44b) leading from the dissolved air flotation reactor (34) directly or indirectly to the anaerobic reactor (12), at least one supply line (42) for a pressurized gas as well as a gas solution device (40) which is connected to the dissolved air flotation reactor (34) via a line (36, 36') and into which the pressurized gas line (42) opens, wherein the waste water supply line (22) opens into a mixer unit (43) and opens from there via a supply line (46) into the dissolved air flotation reactor (34), with the mixer unit (43) having a supply line (21) for pH setting media.

8. An apparatus in accordance with claim 7,
**characterized in that**
the dissolved air flotation device (30) has at least one supply line (20", 20"', 21') for a precipitant and/or a flocculation aid.

9. An apparatus in accordance with claim 7 or claim 8,
**characterized in that**
the mixer unit (43) has a supply line (21') for precipitants and/or flocculation aids.

10. An apparatus in accordance with any one of the claims 7 to 9,
**characterized in that**
it furthermore has a preacidification device (14) which is provided upstream of the anaerobic reactor (12).

11. An apparatus in accordance with claim 10,
**characterized in that**
the preacidification device (14) is connected in its inflow region to a return line (44b) of the dissolved air flotation device (30) and in its outflow region to the supply line (16) of the anaerobic reactor (12).

12. An apparatus in accordance with claim 10 or claim 11,
**characterized in that**
a return line (44a) of the dissolved air flotation device (30) opens directly or via a mixer device arranged in the line (16) between the preacidification device (14) and the anaerobic reactor (12) into the inflow region of the anaerobic reactor (12).

## Revendications

1. Procédé pour la purification d'eaux usées, en particulier pour la purification en continu d'eaux usées dans l'industrie du papier, dans lequel les eaux usées à purifier sont amenées dans un réacteur anaérobique (12), les eaux usées sont mises en contact dans le réacteur anaérobique (12) avec des micro-organismes anaérobiques, afin de dégrader les impuretés contenues dans les eaux usées, et les eaux usées purifiées sont évacuées hors du réacteur anaérobique (12), dans lequel au moins une partie des eaux usées est soumise, dans le but d'une élimination au moins partielle du calcaire, à une étape de flottation-décompression avant d'être admise dans le réacteur anaérobique (12), de sorte que la dureté de l'eau dans l'étape de flottation-décompression est réduite d'au moins 40 %, ledit procédé étant mis en oeuvre dans un appareil qui comprend au moins un réacteur (12) pour la purification anaérobique des eaux usées avec au moins une conduite d'amenée (16) pour l'amenée des eaux usées à purifier jusque dans le réacteur (12) et avec au moins une conduite d'évacuation (24) pour l'évacuation des eaux usées purifiées hors du réacteur (12), l'appareil (10) comprenant en outre un système de flottation-décompression comportant un réacteur de flottation-décompression (34) qui est relié à ladite au moins une conduite d'évacuation (24) du réacteur anaérobique (12) via une conduite d'amenée de flottation-décompression (46') de telle façon qu'au moins un courant partiel des eaux usées purifiées soustrait hors du réacteur anaérobique (12) via la conduite d'évacuation (24) peut être amené jusque dans le réacteur de flottation-décompression, et le système de flottation-décompression (30) comprend une conduite de retour (44, 44a, 44b) qui mène depuis le réacteur de flottation-décompression (34) directement ou indirectement vers le réacteur anaérobique (12), au moins une conduite d'amenée (42) pour un gaz sous pression ainsi qu'un système de dissolution de gaz (40) qui est relié au réacteur de flottation-décompression (34) via une conduite (36, 36') et dans lequel débouche la conduite d'amenée de gaz sous pression (42), la conduite d'amenée (22) pour les eaux usées débouche dans une unité de mélange (43) et, depuis celle-ci, elle débouche dans le réacteur de flottation-décompression (34) via une conduite d'amenée (46), et l'unité de mélange (43) comprend une conduite d'amenée (21) pour des agents de réglage de pH au moyen desquels des agents de réglage de pH sont additionnés aux eaux usées lors de la procédure.

2. Procédé selon la revendication 1,
**caractérisé en ce que** les eaux usées sont établies, dans l'étape de flottation-décompression, à une valeur de pH neutre ou alcaline entre 7 et 10, de préférence entre 7 et 9, et de façon particulièrement préférée entre 7,5 et 8,5, sont mélangées avec du gaz et soumises à une pression, avant que les eaux usées ainsi traitées soient exposées à une pression réduite.

3. Procédé selon la revendication 1 ou 2,
**caractérisé en ce que**, avant ou pendant l'étape de flottation-décompression, on ajoute aux eaux usées au moins un agent de précipitation et/ou au moins un auxiliaire de floculation, et ledit au moins un agent de précipitation est de préférence du polychlorure d'aluminium et/ou ledit au moins un moyen de floculation est de préférence du polyacrylamide.

4. Procédé selon l'une des revendications précédentes,
**caractérisé en ce que** les eaux usées à purifier sont amenées en continu dans un système de flottation-décompression (30) dans lequel se produit l'étape de flottation-décompression et sont mélangées à cet endroit avec au moins une partie des eaux usées évacuées en continu hors du réacteur anaérobique (12) et les eaux usées au moins partiellement débarrassées du calcaire sont évacuées hors du système de flottation-décompression (30) en continu, et sont amenées dans un réacteur de pré-acidification (14) et sont amenées de celui-ci en continu jusque dans le réacteur anaérobique (12).

5. Procédé selon l'une des revendications précédentes,
**caractérisé en ce que** les eaux usées à purifier sont amenées en continu dans un système de flottation-décompression (30) dans lequel se produit l'étape de flottation-décompression, et sont mélangées dans celui-ci avec au moins une partie des eaux usées évacuées en continu hors du réacteur anaérobique, et les eaux usées au moins partiellement débarrassées du calcaire sont évacuées en continu hors du système de flottation-décompression, et sont amenées en continu dans le réacteur anaérobique (12) et/ou au moins partiellement évacuées hors de l'appareil et sont à nouveau employées dans un processus de production.

6. Procédé selon la revendication 4 ou 5,
**caractérisé en ce que**
les eaux usées purifiées évacuées en continu hors du réacteur anaérobique (12) sont subdivisées en deux courants partiels, dont l'un est soustrait hors de l'appareil, et l'autre courant partiel est amené dans le système de flottation-décompression (30), et de sorte que le courant partiel amené au système de flottation-décompression (30) s'élève entre 5 et 80 % et de façon particulièrement préférée entre 30 et 50 % par référence au courant total évacué hors du réacteur anaérobique (12).

7. Appareil pour la purification d'eaux usées, en particulier pour la purification en continu d'eaux usées dans l'industrie du papier selon l'une des revendications 1 à 6, comprenant au moins un réacteur (12) pour la purification anaérobique des eaux usées, avec au moins une conduite d'amenée (16) pour l'amenée des eaux usées à purifier vers le réacteur (12), et avec au moins une conduite d'évacuation (24) pour l'évacuation des eaux usées purifiées hors du réacteur (12), l'appareil comprenant en outre un système de flottation-décompression (30) comprenant un réacteur de flottation-décompression (34), qui est relié au moyen de ladite au moins une conduite d'évacuation (24) du réacteur anaérobique (12) via une conduite d'amenée de flottation-décompression (46') de telle manière qu'au moins un courant partiel des eaux usées purifiées soustraites hors du réacteur anaérobique (12) via la conduite d'évacuation (24) peut être amené jusque dans le réacteur de flottation-décompression (34), et le système de flottation-décompression (30) comprend une conduite de retour (44, 44a, 44b) qui mène depuis le réacteur de flottation-décompression (34) directement ou indirectement au réacteur anaérobique (12), au moins une conduite d'amenée (42) pour un gaz sous pression, ainsi qu'un système de dissolution de gaz (40), qui est relié au réacteur de flottation-décompression (34) via une conduite (36, 36') et dans lequel débouche la conduite d'amenée de gaz sous pression (42), dans lequel la conduite d'amenée d'eaux usées (22) débouche dans une unité de mélange (43) et depuis celle-ci débouche dans le réacteur de flottation-décompression (34) via une conduite d'amenée (46), l'unité de mélange (43) comprenant une conduite d'amenée (21) pour un agent de réglage de pH.

8. Appareil selon la revendication 7,
**caractérisé en ce que** le système de flottation décompression (30) comprend au moins une conduite d'amenée (20", 20"', 21') pour un agent de précipitation et/ou pour un agent auxiliaire de floculation.

9. Appareil selon la revendication 7 ou 8,
**caractérisé en ce que** l'unité de mélange (43) comprend une conduite d'amenée (21') pour un agent de précipitation et/ou un agent auxiliaire de floculation.

10. Appareil selon l'une des revendications 7 à 9,
**caractérisé en ce que** celui-ci comprend en outre un dispositif de pré-acidification (14) qui est prévu en amont du réacteur anaérobique (12).

11. Appareil selon la revendication 10,
**caractérisé en ce que** le dispositif de pré-acidification (14) est relié dans sa zone d'entrée à une conduite de retour (44b) du système de flottation-décompression (30) et est relié dans sa zone de sortie à la conduite d'amenée (16) du réacteur anaérobique (12).

12. Appareil selon la revendication 10 ou 11,
**caractérisé en ce qu'**une conduite de retour (44a) du système de flottation décompression (30) débouche dans la zone d'entrée du réacteur anaérobique (12) soit directement soit via un dispositif de mélange agencé dans la conduite (16) entre le dispositif de pré-acidification (14) et le réacteur anaérobique (12).
